# EUROPEAN PATENT APPLICATION

(11) **EP 4 631 861 A1**
(43) Date of publication of application: **15.10.2025**
(21) Application number: 25169474.1
(22) Date of filing: 09.04.2025
(51) Int. Cl.: B64D 37/30, B64D 37/34, F17C 9/00

(54) **AIRCRAFT HYDROGEN DISTRIBUTION SYSTEM WITH A HELIUM HEAT TRANSFER CIRCUIT**

(30) Priority: 12.04.2024 US 202463633323 P
(71) Applicant: Airbus Operations (S.A.S.), 31060 Toulouse Cedex 9 (FR)
(72) Inventor: RAVENEAU, Guilaume, 31060 TOULOUSE (FR)
(74) Representative: Cabinet Le Guen Maillet

(57) **Abstract**

A system (100, 200) for supplying hydrogen to hydrogen consumer (52) on an aircraft (10) with a helium heat transfer circuit (110). The hydrogen consumer may be a combustion engine or a fuel cell.

## Description

### FIELD OF THE INVENTION

The invention relates to a hydrogen distribution system for an aircraft in order to distribute hydrogen from a tank to a hydrogen consumer, said hydrogen distribution system comprising a helium heat transfer circuit and an aircraft comprising such hydrogen distribution system. The invention relates also to an aircraft comprising such hydrogen distribution system.

### BACKGROUND OF THE INVENTION

It has been suggested that aircraft may utilize hydrogen for powering gas turbine engines or for use in fuel cells providing electricity to electrical motors driving a propeller of the aircraft. Hydrogen (H2) is stored as liquid hydrogen (LH2) in a cryogenic tank at a temperature of approximately -253°C. Hydrogen used by the consumers is gaseous hydrogen (GH2).

LH2 in a tank will tend to be at saturation (thermodynamically stable state) especially when the tank will be in an aircraft environment (aircraft movement, vibration, ...). For high pressure interface requirements, a pump is needed to increase the pressure to the adequate need (tank pressure is under the requirement to reduce the tank mass). Pumps may require Net Positive Suction Pressure (NPSP) to function properly. Net Positive Suction Pressure is the difference between the pressure and the saturated pressure of a fluid at a specific temperature. Without NPSP, the pump may create gas when withdrawing the liquid from the tank which could impair the capability to rise pressure and damage the pump.

Therefore, a system is needed to create NPSP at the inlet of the pump.

### SUMMARY OF THE INVENTION

An object of the present invention is to provide a hydrogen distribution system to distribute hydrogen from a tank to a hydrogen consumer in an aircraft, said hydrogen distribution system utilizing a helium heat transfer circuit to create NPSP for the pump withdrawing hydrogen from the tank.

For this purpose, is proposed a hydrogen distribution system for supplying hydrogen to a hydrogen consumer on an aircraft, the hydrogen distribution system comprising:
- a tank storing a liquid and gaseous hydrogen;
- a supply pipe fluidly connected between the tank and the hydrogen consumer;
- a first pump arranged on the supply pipe and configured to circulate the liquid hydrogen from the tank to the hydrogen consumer; and
- a helium heat transfer circuit arranged between the supply pipe and the tank and upstream the first pump.

The solution allows utilization, at the same time, of a low-pressure saturated tank and a pump without overly burdensome NPSP requirements.

The low-pressure tank is advantageous because of the hydrogen in a thermodynamically stabilized state (reduce impact of sloshing effect, aircraft ground operation are made easier). Additionally, such a tank has a reduced tank mass as the hydrogen could be stored independently of the interface need (as the pump is capable of increasing the pressure to the need).

Advantageously, the helium heat transfer circuit comprises:
- a first heat exchanger arranged on the supply pipe,
- a second heat exchanger arranged in the tank,
- a circulation pipe realizing a loop between the first heat exchanger and the second heat exchanger and in which helium circulates, and
- a compressor arranged on the circulation pipe and configured to circulate the helium from the first heat exchanger to the second heat exchanger.

Advantageously, the helium heat transfer circuit comprises a turbine arranged on the part of the circulation pipe between the second heat exchanger and the first heat exchanger where the helium circulates from the second heat exchanger to the first heat exchanger.

Advantageously, the turbine is mechanically coupled to the compressor. Advantageously, the hydrogen distribution system further comprises:
- a pressure sensor arranged upstream the first pump to measure the pressure of the hydrogen in the supply pipe,
- a temperature sensor arranged upstream the first pump to measure the temperature of the hydrogen in the supply pipe, and
- a control unit arranged to receive data from the pressure sensor and the temperature sensor and to control the speed of the compressor according to these data. Advantageously, the hydrogen distribution system comprises a recirculation pipe fluidly connected between an output port of the first pump and an input port of the first pump.

The invention concerns also an aircraft comprising a hydrogen consumer and a hydrogen distribution system according to any of the preceding embodiments wherein the supply pipe is fluidly connected to the hydrogen consumer.

### BRIEF DESCRIPTION OF THE DRAWINGS

Embodiments of the invention are described in more detail with reference to the accompanying schematic drawings that are listed below:
Fig. 1 depicts an aircraft according to the invention,
Fig. 2 is a schematic drawing of a hydrogen distribution system according to a first embodiment of the present invention; and,
Fig. 3 is a schematic drawing of a hydrogen distribution system according to a second embodiment of the present invention.

### DETAILED DESCRIPTION OF THE PREFERRED EMBODIMENTS

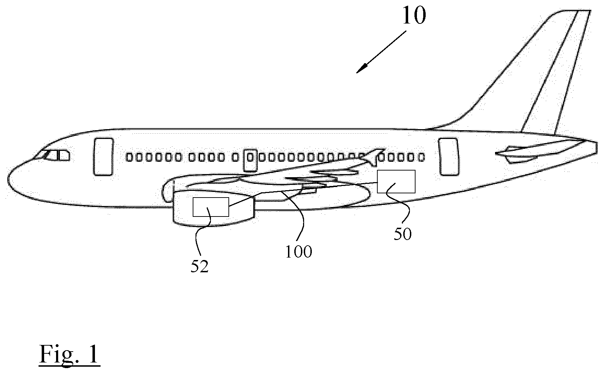

Fig 1 depicts an aircraft 10 comprising a liquid hydrogen tank 50 containing hydrogen under liquid phase and gaseous phase at saturation (NPSP=0) and at about -253°C.

The aircraft 10 comprises also a hydrogen consumer 52. In Fig. 1, the hydrogen consumer 52 can be a combustion engine, for example a turbine engine, a turbopropeller, .... Alternatively, the hydrogen consumer 52 may be fuel cells producing electricity for powering electrical motors driving a propulsive fan (via a gear box).

Between the tank 50 and the hydrogen consumer 52, the aircraft 10 comprises a hydrogen distribution system 100, 200 according to the invention.

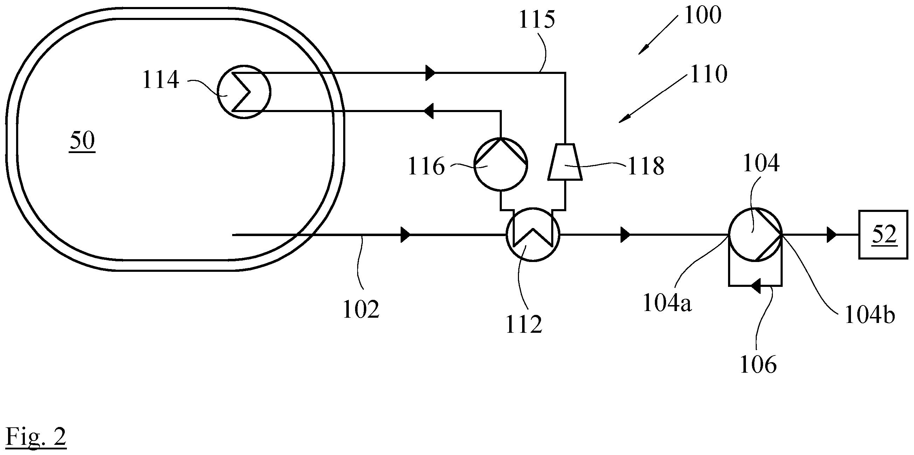

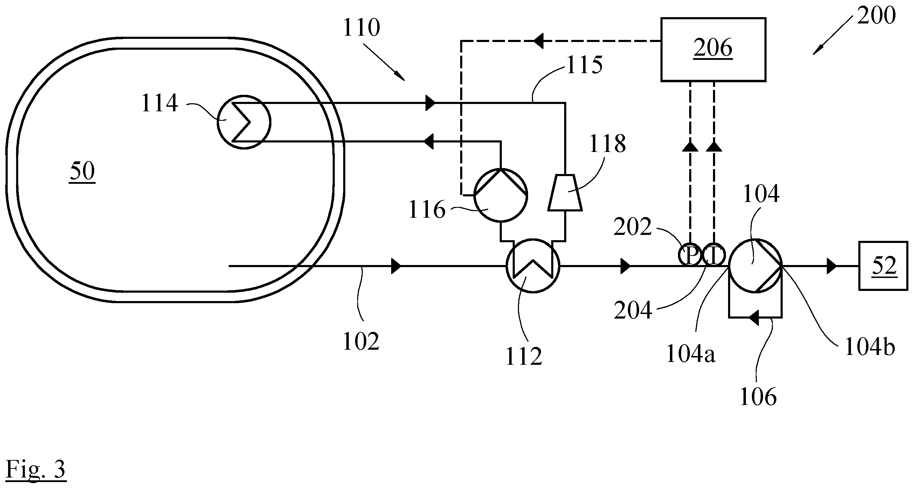

Fig 2 depicts a hydrogen distribution system 100 according to a first embodiment of the invention, and Fig. 3 depicts a hydrogen distribution system 200 according to a second embodiment of the invention. In the two embodiments, the same references concern the same elements.

The hydrogen distribution system 100, 200 supplies hydrogen to a hydrogen consumer 52 on the aircraft 10. The hydrogen distribution system 100, 200 comprises a tank 50 storing hydrogen in liquid and gaseous phases, particularly at saturation. The hydrogen distribution system 100, 200 comprises also a supply pipe 102 fluidly connected between the tank 50 and the hydrogen consumer 52.

The hydrogen distribution system 100, 200 comprises also a first pump 104 arranged on the supply pipe 102 and configured to circulate the liquid hydrogen from the tank 50 to the hydrogen consumer 52. The first pump 104 pressurizes liquid hydrogen taken from tank 50 and circulates a high-pressure liquid hydrogen to the hydrogen consumer 52.

The hydrogen distribution system 100, 200 comprises also a helium heat transfer circuit 110 arranged between the supply pipe 102 and the tank 50 and upstream the first pump 104. The helium heat transfer circuit 110 transfers the calories from the hydrogen in the supply pipe 102 to the hydrogen in the tank 50.

This embodiment utilizes the helium heat transfer circuit 110 to create NPSP for the first pump 104 withdrawing hydrogen from the tank 50. With NPSP, the first pump 104 doesn't create gas when withdrawing the hydrogen in liquid phase from the tank 50.

The first pump 104 comprises an input port 104a where the supply line 102 introduces hydrogen in the first pump 104 and output port 104b where the supply line 102 extracts hydrogen from the first pump 104 to flow the hydrogen to the hydrogen consumer 52.

In the present invention, the hydrogen distribution system 100, 200 comprises a recirculation pipe 106 fluidly connected between the output port 104b of the first pump 104 and the input port 104a of the first pump 104. The hydrogen can recirculate from the output port 104b to the input port 104a. The recirculation may be internal to the first pump 104 or external to the first pump 104.

The helium heat transfer circuit 110 comprises a first heat exchanger 112 arranged on the supply pipe 102 between the tank 50 and the first pump 104, and a second heat exchanger 114 arranged in the tank 50.

The helium heat transfer circuit 110 comprises also a circulation pipe 115 realizing a loop between the first heat exchanger 112 and the second heat exchanger 114 and helium circulates in this loop between the two heat exchangers 112 and 114.

The helium heat transfer circuit 110 comprises also a compressor 116 arranged on the circulation pipe 115 and configured to circulate the helium from the first heat exchanger 112 to the second heat exchanger 114. The compressor 116 circulates also the helium from the second heat exchanger 114 to the first heat exchanger 112.

The first heat exchanger 112 reduces the temperature of the hydrogen in the supply pipe 102 and transfers heat from the hydrogen to the helium in the circulation pipe 115.

At the same time, the second heat exchanger 114 in the tank 50 decreases the temperature of the helium in the circulation pipe 115 and transfers heat from the helium to the hydrogen in the tank 50. Additionally, the power injected in the tank 50 will help to pressurize or maintain the pressure of the tank 50 by adding energy to the tank 50.

The compressor 116 increases the helium pressure and the temperature will increase accordingly.

In the embodiments of the invention, the helium heat transfer circuit 110 comprises a turbine 118 arranged on the part of the circulation pipe 115 between the second heat exchanger 114 and the first heat exchanger 112 where the helium circulates from the second heat exchanger 114 to the first heat exchanger 112. In other words, in accordance with the direction of flowing of the helium in the circulation pipe 115, the compressor 116 is downstream the first heat exchanger 112 and upstream the second heat exchanger 114, and the turbine 118 is downstream the second heat exchanger 114 and upstream the first heat exchanger 112.

The turbine 118 decreases the pressure of the helium and the temperature will decrease accordingly.

The helium heat transfer circuit 110 is a refrigeration cycle taking energy from the hydrogen in the supply pipe 102 and transferring this energy to the hydrogen in the tank 50.

According to a specific embodiment, the turbine 118 is mechanically coupled to the compressor 116, for example through an axle fixed between the mobile parts of the turbine 118 and the mobile parts of the compressor 116. Any additionally required mechanical energy may be added by an electrical motor (not shown).

It is also possible that the compressor 116 is powered by an electrical motor and the turbine 118 produces electrical energy recovered by the electrical network of the aircraft 10.

According to an example of embodiment, the mass flow in the helium heat transfer circuit 110 is 50g/s. The temperature and the pressure of the helium at the entry of the compressor 116 is 19K and 1,1 bar. The temperature and the pressure of the helium at the output of the compressor 116 is 30K and 2,7 bar. The temperature and the pressure of the helium at the entry of the turbine 118 is 23K and 2,7 bar. The temperature and the pressure of the helium at the output of the turbine 118 is 17K and 1,1 bar.

In the second embodiment, the hydrogen distribution system 200 comprises also a pressure sensor 202, a temperature sensor 204 and a control unit 206.

The pressure sensor 202 is arranged upstream the first pump 104 to measure the pressure of the hydrogen in the supply pipe 102 and it is utilized to measure the pressure of the hydrogen at the inlet port 104a of the first pump 104.

The temperature sensor 204 is arranged upstream the first pump 104 to measure the temperature of the hydrogen in the supply pipe 102, and it is utilized to measure the temperature of the hydrogen at the inlet port 104a of the first pump 104.

The pressure sensor 202 and the temperature sensor 204 are in communication with the control unit 206 which receive data from the pressure sensor 202 and the temperature sensor 204.

The control unit 206 is also arranged to control the speed of the compressor 116 according to these pressure and temperature data.

According to another particular embodiment, the regulation is done through a PID with control loop feedback with a target NPSP comprises between 50 mbar and 1 bar. NPSP may be calculated by a control software on the control unit 206 based on pressures and temperatures measured by the sensors 202 and 204. When the NPSP is under a NPSP target range, the speed of the compressor 116 is increased and when the NPSP is above another or same NPSP target range, the speed of the compressor 116 is decreased.

The control unit described herein may include a controller or a computing device comprising a processing and a memory which has stored therein computer-executable instructions for implementing the processes described herein. The control unit may comprise any suitable devices configured to cause a series of steps to be performed so as to implement the method such that instructions, when executed by the computing device or other programmable apparatus, may cause the functions/acts/steps specified in the methods described herein to be executed. The control unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory may be any suitable known or other machine-readable storage medium. The memory may comprise non-transitory computer readable storage medium such as, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to the device such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. The memory may comprise any storage means (e.g., devices) suitable for retrievably storing the computer-executable instructions executable by control unit. The methods and systems described herein may be implemented in a high-level procedural or object-oriented programming or scripting language, or a combination thereof, to communicate with or assist in the operation of the controller or computing device. Alternatively, the methods and systems described herein may be implemented in assembly or machine language. The language may be a compiled or interpreted language. Program code for implementing the methods and systems described herein may be stored on the storage media or the device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Computer-executable instructions may be in many forms, including modules, executed by one or more computers or other devices. Generally, modules include routines, programs, objects, components, data structures, etc., that perform particular tasks or implement particular abstract data types. Typically, the functionality of the modules may be combined or distributed as desired in various embodiments.

It will be appreciated that the systems and devices and components thereof may utilize communication through any of various network protocols such as TCP/IP, Ethernet, FTP, HTTP and the like, and/or through various wireless communication technologies such as GSM, CDMA, Wi-Fi, and WiMAX, is and the various computing devices described herein may be configured to communicate using any of these network protocols or technologies..

## Claims

1. Hydrogen distribution system (100, 200) for supplying hydrogen to a hydrogen consumer (52) on an aircraft (10), the hydrogen distribution system (100, 200) comprising:
- a tank (50) storing a liquid and gaseous hydrogen;
- a supply pipe (102) fluidly connected between the tank (50) and the hydrogen consumer (52);
- a first pump (104) arranged on the supply pipe (102) and configured to circulate the liquid hydrogen from the tank (50) to the hydrogen consumer (52); and
- a helium heat transfer circuit (110) arranged between the supply pipe (102) and the tank (50) and upstream the first pump (104).

2. Hydrogen distribution system (100, 200) according to claim 1, wherein the helium heat transfer circuit (110) comprises:
- a first heat exchanger (112) arranged on the supply pipe (102),
- a second heat exchanger (114) arranged in the tank (50),
- a circulation pipe (115) realizing a loop between the first heat exchanger (112) and the second heat exchanger (115) and in which helium circulates, and
- a compressor (116) arranged on the circulation pipe (115) and configured to circulate the helium from the first heat exchanger (112) to the second heat exchanger (114).

3. Hydrogen distribution system (100, 200) according to claim 2, wherein the helium heat transfer circuit (110) comprises a turbine (118) arranged on the part of the circulation pipe (115) between the second heat exchanger (114) and the first heat exchanger (112) where the helium circulates from the second heat exchanger (114) to the first heat exchanger (112).

4. Hydrogen distribution system (100, 200) according to claim 3, wherein the turbine (118) is mechanically coupled to the compressor (116).

5. Hydrogen distribution system (200) according to any of claims 2 to 4, wherein it further comprises:
- a pressure sensor (202) arranged upstream the first pump (104) to measure the pressure of the hydrogen in the supply pipe (102),
- a temperature sensor (204) arranged upstream the first pump (104) to measure the temperature of the hydrogen in the supply pipe (102), and
- a control unit (206) arranged to receive data from the pressure sensor (202) and the temperature sensor (204) and to control the speed of the compressor (116) according to these data.

6. Hydrogen distribution system (100, 200) according to any of the preceding claims, wherein it comprises a recirculation pipe (106) fluidly connected between an output port (104b) of the first pump (104) and an input port (104a) of the first pump (104).

7. Aircraft (10) comprising a hydrogen consumer (52) and a hydrogen distribution system (100, 200) according to any of the preceding claims wherein the supply pipe (102) is fluidly connected to the hydrogen consumer (52).
